# EUROPÄISCHE PATENTSCHRIFT

(11) **EP 2 301 784 B1**
(45) Veröffentlichungstag und Bekanntmachung des Hinweises auf die Patenterteilung: **06.01.2016**
(21) Anmeldenummer: 10177954.4
(22) Anmeldetag: 21.09.2010
(51) Int. Cl.: B60J 7/02

(54) **Schiebedeckelanordnung**
Sliding lid assembly
Agencement de couvercle coulissant

(30) Priorität: 25.09.2009 DE 102009043130
(43) Veröffentlichungstag der Anmeldung: 30.03.2011
(73) Patentinhaber: Webasto SE, 82131 Stockdorf (DE)
(72) Erfinder: De Waal, Martin, 1566TS Assendelft (NL); Sterkenburgh, Sybrand, 7948 DH Nijeveen (NL)
(74) Vertreter: advotec.

(56) Entgegenhaltungen:
- EP-A1- 1 095 807
- WO-A1-2005/021306
- DE-A1-102007 004 258
- DE-U1-202005 007 475
- DE-U1-202007 003 080

## Beschreibung

Die Erfindung betrifft eine Schiebedeckelanordnung für ein Fahrzeug, insbesondere für ein wassergebundenes Fahrzeug, gemäß dem Oberbegriff des Patentanspruches 1.

Eine solche Schiebedeckelanordnung ist aus DE 10 2007 004258 A1 bekannt.

Eine derartige Schiebedeckelanordnung ist aus der Praxis bekannt und kann bei einem Schiff zum wahlweisen Öffnen oder Schließen einer Dachöffnung bzw. Decköffnung dienen. Eine solche Schiebedeckelanordnung umfasst ein Deckelelement, das zwischen einer Schließstellung, in der die Schiffsöffnung verschlossen ist, und einer Öffnungsstellung verstellbar, in der die Schiffsöffnung freigegeben ist. Zum Antrieb des Deckelelements weist die Schiebedeckelanordnung eine Steuermechanik auf, die bezogen auf eine Längsmittelebene des Deckelelements beidseits eine Gleitereinheit umfasst, die in einer fahrzeugfesten Schienenanordnung geführt ist und mittels eines drucksteifen Antriebskabels angetrieben ist.

Bei im Bereich von Schiffen eingesetzten Schiebedeckelanordnungen besteht das Problem, dass die zu verschließenden Dach- bzw. Decköffnungen sehr große Abmessungen, beispielsweise von 3m x 3m haben können. Das zu bewegende Deckelelement weist dann ein sehr hohes Eigengewicht auf, dem die Steuermechanik standhalten muss. Des Weiteren muss das Deckelelement die Dach- bzw. Decköffnung auch bei rauen Bedingen, die im marinen Bereich auftreten, mit hoher Zuverlässigkeit dicht verschließen.

Der Erfindung liegt die Aufgabe zugrunde, eine gemäß der einleitend genannten Art ausgebildete Schiebedeckelanordnung zu schaffen, die insbesondere auch für große Deckelelementabmessungen, die im marinen Bereich vorgegeben sein können, mit einer großen Flexibilität bei gleichzeitig gutem Dichtverhalten einsetzbar ist.

Diese Aufgabe ist erfindungsgemäß durch die Schiebedeckelanordnung mit den Merkmalen des Patentanspruches 1 gelöst.

Gemäß einem ersten Aspekt der Erfindung umfassen die in den Schienenanordnungen geführten Gleitereinheiten mithin jeweils ein vorderes, einem vorderen Rand des Deckelelements zugeordnetes Gleitelement und ein hinteres, einem hinteren Rand des Deckelelements zugeordnetes Gleitelement, wobei die beiden jeweiligen Gleitelemente über ein jeweils gelenkig angebundenes, drucksteifes Kopplungselement miteinander verbunden sind.

Bei dem der Schiebedeckelanordnung nach der Erfindung kann also ein Antrieb nur an einem der beiden Antriebsschlitten darstellenden Gleitelemente, die einer Schienenanordnung bzw. einer in dieser Schienenanordnung geführten Gleitereinheit zugeordnet sind, angreifen. Die Antriebskräfte werden über das an eines der beiden Gleitelemente gelenkig angebundene, drucksteife Kopplungselement auf das andere der beiden Gleitelemente übertragen. Durch die gelenkige Anbindung des Koppelelements können die beiden Gleitelemente einen großen Abstand voneinander haben, was insbesondere bei marinen Anwendungen, bei denen mittels der Schiebedeckelanordnung große Schiffsöffhungen geschlossen bzw. freigegeben werden, vorteilhaft ist. Durch das gelenkig angebundene Koppelelement kann ein gegebenenfalls nicht gerader Verlauf der den beiden Gleitelementen zugeordneten Schienenanordnung ausgeglichen werden. Einem Verklemmen der Gleitelemente kann somit wirkungsvoll entgegengewirkt werden.

Die Schiebedeckelanordnung nach der Erfindung kann ein Deckelelement aus verschiedenartigen Materialien aufweisen. Beispielsweise ist das Deckelelement aus einem transparenten Material, wie Glas oder einem transparenten Kunststoff gefertigt. Denkbar ist es aber auch, das Deckelelement aus einem opaken Werkstoff wie Stahl, glasfaserverstärktem Kunststoff oder dergleichen zu fertigen.

In jedem Fall ist es insbesondere bei einer für Schiffe ausgelegten Schiebedeckelanordnung zweckmäßig, nicht korrosive Werkstoffe für das Deckelelement und auch für die Steuermechanik einzusetzen, die den rauen Bedingungen auf offener See standhalten.

Wenn das Deckelelement transparent ausgebildet ist, kann die Schiebedeckelanordnung zusätzlich mit einer Sonnenblende, wie einem Rollo oder einem verschiebbaren, flächigen Festelement ausgestattet sein.

Mit der Schiebedeckelanordnung nach der Erfindung kann beispielsweise bei einer Motoryacht eine Dachöffnung freigegeben oder zuverlässig geschlossen werden, mittels der die Licht- und Belüftungsbedingungen an Bord verbessert werden können.

Die Schiebedeckelanordnung nach der Erfindung kann Bestandteil der Erstausstattung eines Schiffes sein oder auch in Verbindung mit einer nachträglich eingebrachten Dachöffnung als Nachrüstsatz ausgebildet sein.

Das vordere Gleitelement kann zur Steuerung der Bewegung eines vorderen Randes des Deckelelements ausgelegt sein, wohingegen das hintere Gleitelement zur Steuerung einer Bewegung eines hinteren Randes des Deckelelements ausgelegt sein kann.

Grundsätzlich dienen die vorliegend benutzten Lageangaben "vorne", "hinten", "vorderes", "hinteres", "links", "rechts", "oben" und "unten" nur zur Orientierung innerhalb der Schiebedeckelanordnung. Es muss nicht zwingend ein Bezug zu dem betreffenden Fahrzeug bestehen. Auch besteht kein Bezug hinsichtlich der Öffnungs- und der Schließrichtung des Deckelelements.

Bei einer bevorzugten Ausführungsform der Schiebedeckelanordnung nach der Erfindung ist das Koppelelement eine Koppelstange, die über ein vorderes Gelenk mit dem vorderen Gleitelement und ein hinteres Gelenk mit dem hinteren Gleitelement der betreffenden Gleiteinrichtung verbunden ist. Für unterschiedliche Abmessungen der Schiebedeckelanordnung kann damit der grundsätzlich gleiche Aufbau der Steuermechanik genutzt werden. Es ist gegebenenfalls nur erforderlich, die Koppelstange hinsichtlich ihrer Länge an die Abmessungen des Deckelelements in Richtung der Schienenanordnungen anzupassen.

Die Erfindung hat auch eine Schiebedeckelanordnung für ein Fahrzeug, insbesondere für wassergebundenes Fahrzeug zum Gegenstand, das ein Deckelelement, das wahlweise zwischen einer Schließstellung, in der eine Fahrzeugöffnung verschlossen ist, und einer Öffnungsstellung verstellbar ist, in der die Fahrzeugöffnung freigegeben ist, und eine Steuermechanik für das Deckelement umfasst, die bezogen auf eine Längsmittelebene des Deckelelements beidseits eine Gleitereinheit umfasst, die in einer fahrzeugfesten Schienenanordnung geführt ist und mittels eines drucksteifen Antriebskabels angetrieben ist. Die in den Schienenanordnungen geführten Gleiteinrichtungen umfassen jeweils ein vorderes Gleitelement, das einem vorderen Rand des Deckelelements zugeordnet ist, und ein hinteres Gleitelement, das einem hinteren Rand des Deckelelements zugeordnet ist. Die beiden Gleitelemente umfassen jeweils eine mit einem Steuerzapfen zusammenwirkende Steuerbahn zum vertikalen Versatz des jeweiligen Randes des Deckelelements. Sowohl dem vorderen Rand als auch dem hinteren Rand des Deckelelements ist jeweils ein insbesondere als Zapfen ausgebildetes Sperrelement zugeordnet, das in der Schließstellung in eine jeweilige Sperrkulisse eingreift, die an der betreffenden Schienenanordnung angeordnet ist und einen Versatz des Deckelelements parallel zur Achse der Schienenanordnungen sperrt.

Durch diese Auslegung der Schiebedeckelanordnung mit einer vorderen und einer hinteren Sperrkulisse kann das Deckelelement zuverlässig in der Schließstellung gehalten werden, in welcher das Deckelelement die betreffende Fahrzeugöffnung überdeckt und vorzugsweise über eine Dichtungsanordnung, die marinen Bedingungen standhält, an einer korrespondierenden Dichtfläche anliegt.

Zweckmäßigerweise sind die beiden Sperrkulissen, von denen eine dem vorderen Gleitelement und die andere dem hinteren Gleitelement zugeordnet ist, jeweils von einem Einsatz der jeweiligen Schienenanordnung gebildet.

Die Sperrkulissen weisen bei einer bevorzugten Ausführungsform der Schiebedeckelanordnung nach der Erfindung vorzugsweise jeweils einen Einlaufabschnitt, der in etwa in der Ebene einer Führungsbahn des betreffenden Sperrzapfens in der jeweiligen Schienenanordnung liegt, sowie einen Sperrabschnitt auf, dessen Achse gegenüber dem Einlaufabschnitt und damit gegenüber der Achse der jeweiligen Schienenanordnung angestellt ist. Wenn der Sperrzapfen in diesem Sperrabschnitt liegt, ist ohne zusätzlichen Versatz des jeweiligen Randes des Deckelelements quer zur Achse der Schienenanordnungen kein Versatz des Deckelelements parallel zu den Schienenanordnungen möglich. Hingegen ist das Deckelelement bei Anordnung der Sperrzapfen in den Einlaufabschnitten parallel zur Achse der Schienenanordnungen verschiebbar.

Zur wirksamen Ankopplung des Deckelelements an die Steuermechanik weist das Deckelelement bei einer bevorzugten Ausführungsform beidseits jeweils einen Deckelträger auf, an dem zur Kopplung mit der Steuerbahn des vorderen Gleitelements der betreffende Steuerzapfen ausgebildet ist und zur Kopplung mit der Steuerbahn des hinteren Gleitelements ein Ausstellhebel angelenkt ist, der mit dem in die Steuerbahn des hinteren Gleitelements eingreifenden Steuerzapfen versehen ist. Der vordere Rand des Deckelelements erfährt damit beim Verschieben des vorderen Gleitelements gegenüber dem Deckelelement durch die Bewegung des betreffenden Steuerzapfens in der kulissenartigen Steuerbahn des vorderen Gleitelements einen Versatz quer zur Achse der Führungsanordnungen. Der hintere Rand des Deckelelements erfährt hingegen einen Versatz quer zur Achse der Schienenanordnungen durch die Ausstellbewegung des Ausstellhebels, die durch das Zusammenwirken des hinteren Gleitelements mit dem an dem Ausstellhebel ausgebildeten Steuerzapfen induziert wird.

Um das Deckelelement zuverlässig in seiner Öffnungsstellung und seiner Sperrstellung halten zu können, umfasst die Steuerbahn des hinteren Gleitelements bei einer bevorzugten Ausführungsform einen sich zumindest annähernd parallel zur Führungsschiene erstreckenden, der Schließstellung des Deckelelements zugeordneten ersten Endabschnitt und einen sich zumindest annähernd parallel zur Führungsschiene erstreckenden, der Öffnungsstellung des Deckelelements zugeordneten zweiten Endabschnitt sowie einen die beiden Endabschnitte verbindenden, dem Verschwenken des Ausstellhebels zugeordneten Verschwenkabschnitt, dessen Achse gegenüber den Achsen der beiden Endabschnitte angestellt ist. In der Schließstellung sperrt damit der erste Endabschnitt der Steuerbahn des hinteren Gleitelements die Ausstellbewegung und damit den Versatz des hinteren Randes des Deckelelements quer zur Achse der Schienenanordnungen, wohingegen der Sperrabschnitt der Sperrkulissen den Versatz in Verschieberichtung sperrt. Die Steuerbahn des hinteren Gleitelements und die diesem zugeordnete Sperrkulisse wirken also in einer hinsichtlich der Dichtwirkung des Deckelelements optimierten Weise zusammen.

Um eine positionsgenaue Führung des Ausstellhebels in der Führungsschiene zu gewährleisten, ist der Ausstellhebel bei einer bevorzugten Ausführungsform der Schiebedeckelanordnung nach der Erfindung an einem Gleitschlitten gelagert, der eine Ausstellhebelschwenkachse definiert und in einem Führungskanal der betreffenden Schienenanordnung geführt ist.

Entsprechend dem hinteren Gleitelement wirkt bei einer bevorzugten Ausführungsform der Schiebedachanordnung nach der Erfindung das vordere Gleitelement mit der diesem zugeordneten Sperrkulisse zusammen. Insbesondere sperrt in der Schließstellung des Deckelelements die Steuerbahn des vorderen Gleitelements einen vertikalen bzw. quer zur Achse der Schienenanordnungen erfolgenden Versatz des vorderen Randes des Deckelelements, wohingegen die an der betreffenden Schienenanordnung ausgebildete Sperrkulisse für den Sperrzapfen des Deckelträgers einen Versatz des Deckelelements in dessen Verschieberichtung sperrt.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel einer Schiebedeckelanordnung nach der Erfindung ist in der Zeichnung schematisch vereinfacht dargestellt und wird in der nachfolgenden Beschreibung näher erläutert. Es zeigt:
- **Figur 1**: eine perspektivische Draufsicht auf ein Schiffsdach mit einer Schiebedeckelanordnung nach der Erfindung;
- **Figur 2**: eine perspektivische Seitenansicht der Schiebedeckelanordnung des Daches nach Figur 1 in einer Schließstellung (a), in einer Ausstellstellung (b), in einer Freigabestellung (c) und in einer Öffnungsstellung (d);
- **Figur 3**: perspektivische Ansichten einer Schienenanordnung mit daran geführtem Deckelelement in dessen Schließstellung (a), Ausstellstellung (b), Freigabestellung (c) und Öffnungsstellung (d);

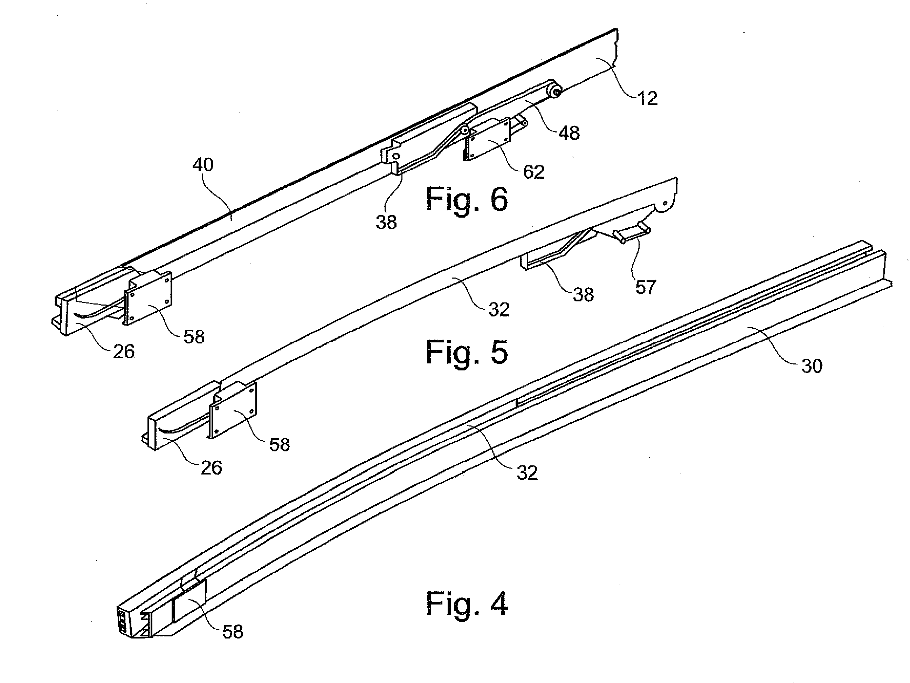

- **Figur 4**: eine perspektivische Draufsicht einer Schienanordnung mit darin geführtem Deckelträger;
- **Figur 5**: den Deckelträger zusammen mit Gleitelementen;
- **Figur 6**: eine Steuermechanik der Schiebedeckelanordnung;

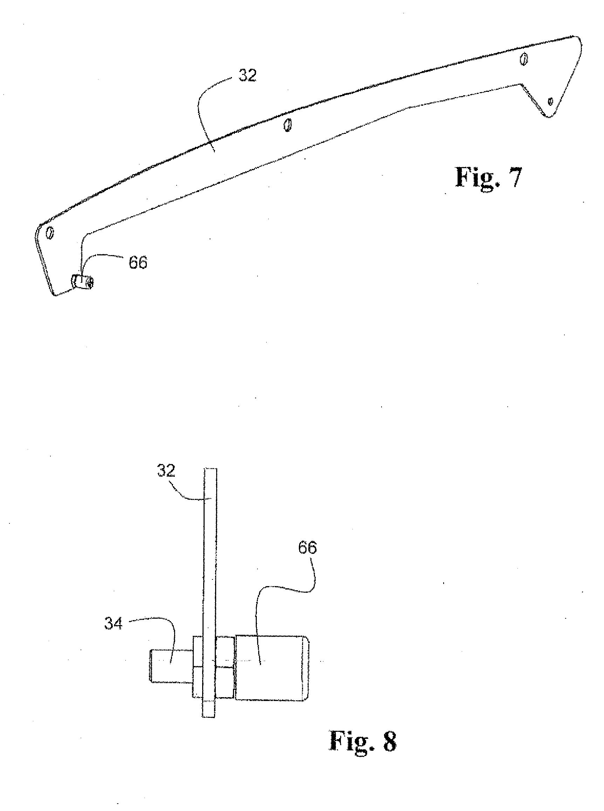

- **Figur 7**: den Deckelträger in Alleinstellung;
- **Figur 8**: eine Draufsicht des Deckelträgers in dessen vorderen Endbereich;

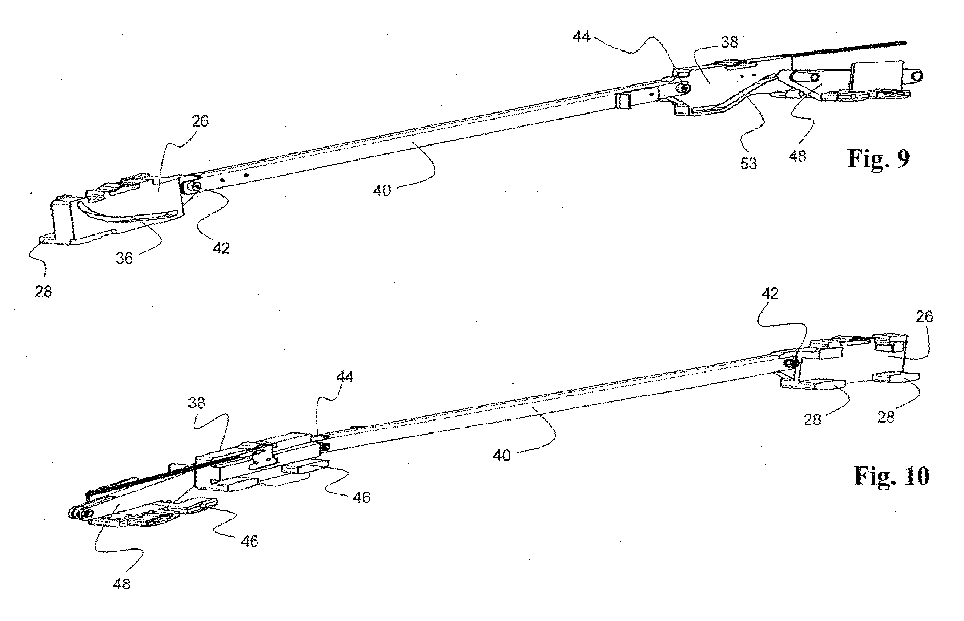

- **Figur 9**: eine erste perspektivische Seitenansicht einer Gleiteinrichtung aus zwei Gleitelementen;
- **Figur 10**: eine zweite perspektivische Ansicht der Gleiteinrichtung;

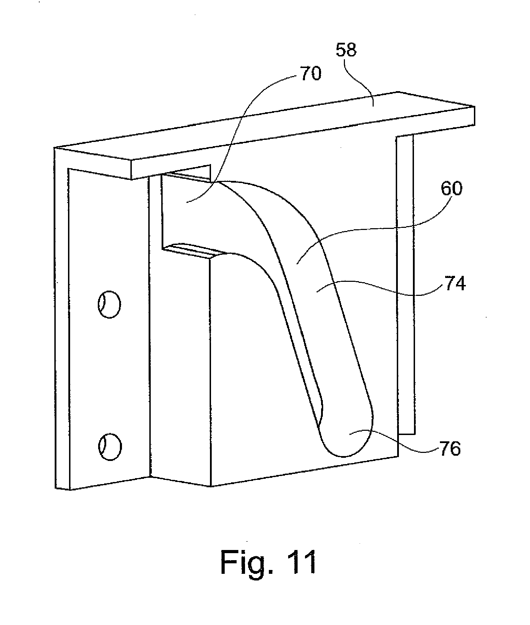

- **Figur 11**: einen Einsatz der Schienenanordnung mit vorderer Sperrkulisse;

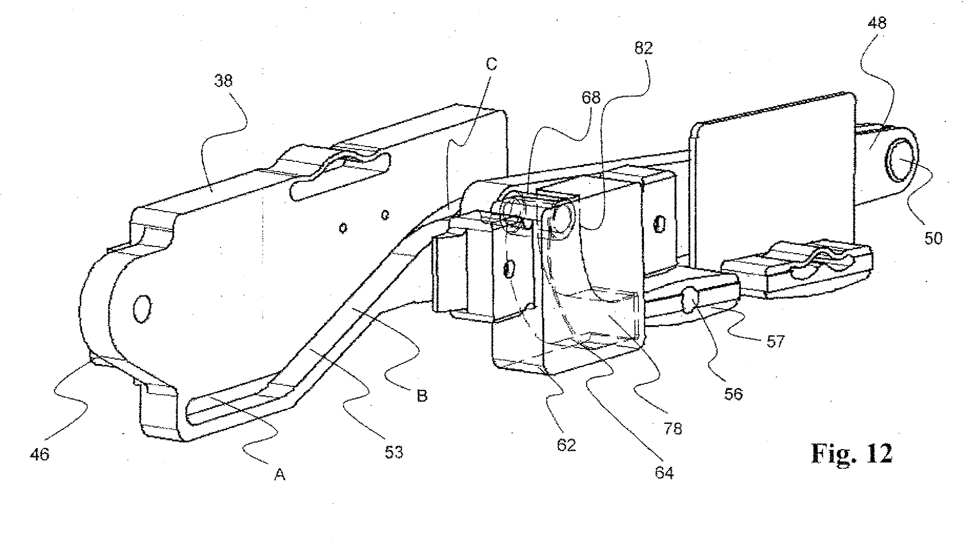

- **Figur 12**: eine perspektivische Seitenansicht des hinteren Gleitelements zusammen mit einem Ausstellhebel und einer hinteren Sperrkulisse;

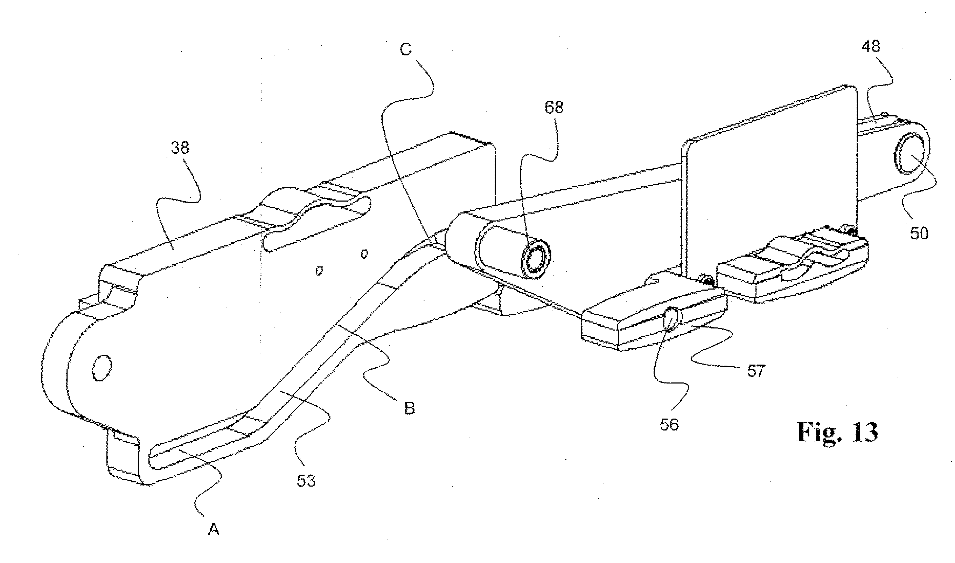

- **Figur 13**: eine perspektivische Ansicht des Ausstellhebels und des hinteren Gleitelements in Alleinstellung;

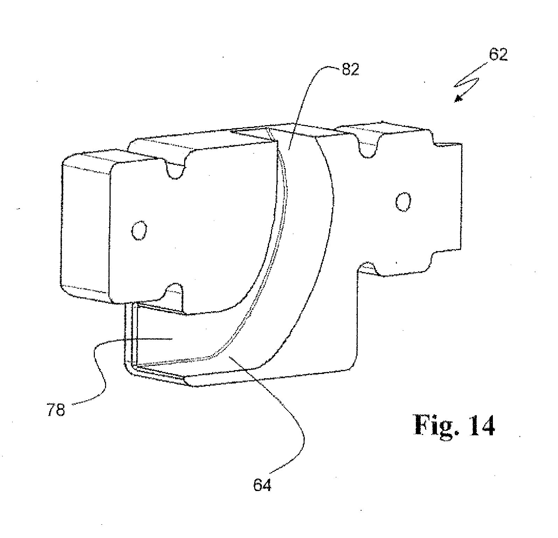

- **Figur 14**: eine perspektivische Ansicht eines Einsatzes der Schienenanordnung mit der hinteren Sperrkulisse; und

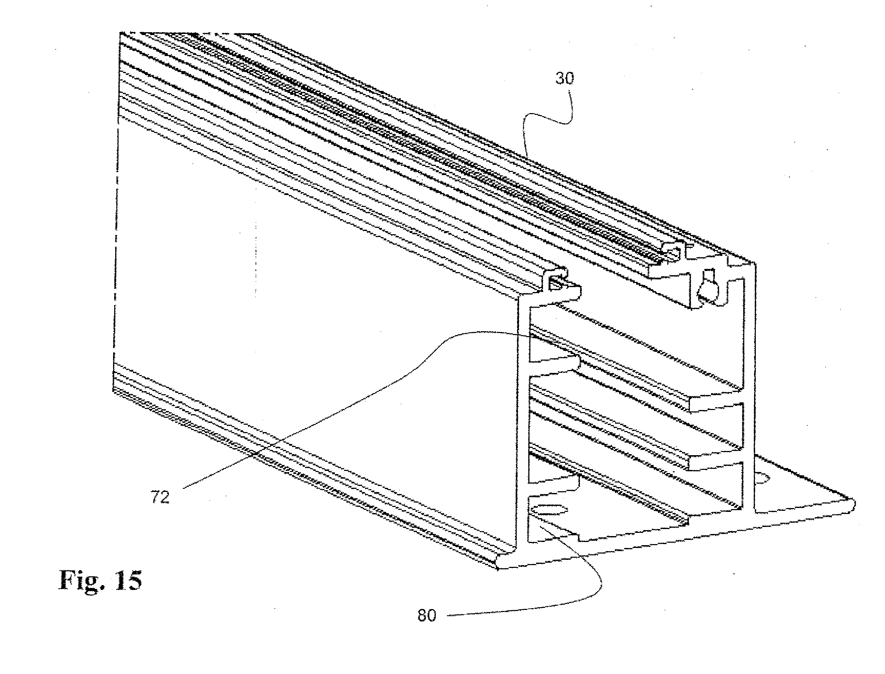

- **Figur 15**: die Schienenanordnung in Alleinstellung.

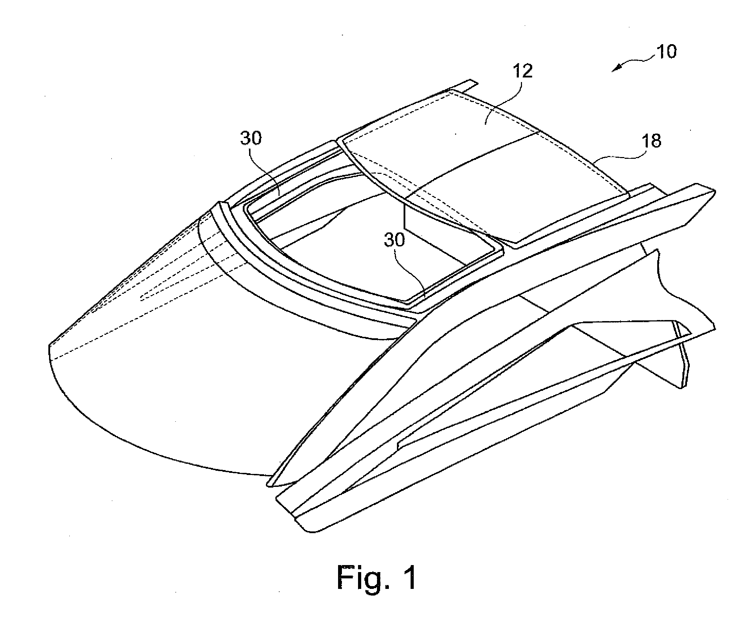

In Figur 1 ist ein Dach einer hochseetauglichen Motoryacht dargestellt, das mit einem in Längsrichtung der Yacht verschiebbaren Deckelelement 12 versehen ist, welches Abmessungen von 3m x 2m und ein Gewicht von 150Kg aufweisen kann und mittels dessen eine Dachöffnung 14 wahlweise verschlossen oder zumindest teilweise freigegeben werden kann, d.h. das Deckelelement 12 ist zwischen einer in Figur 1 dargestellten Öffnungsstellung und einer die Dachöffnung 14 überdeckenden Schließstellung verstellbar.

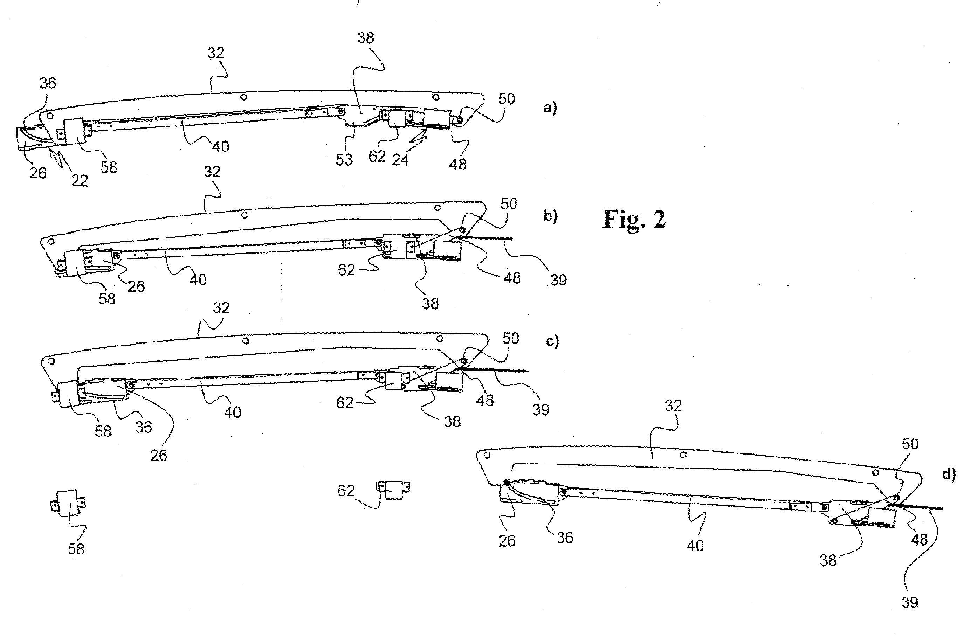

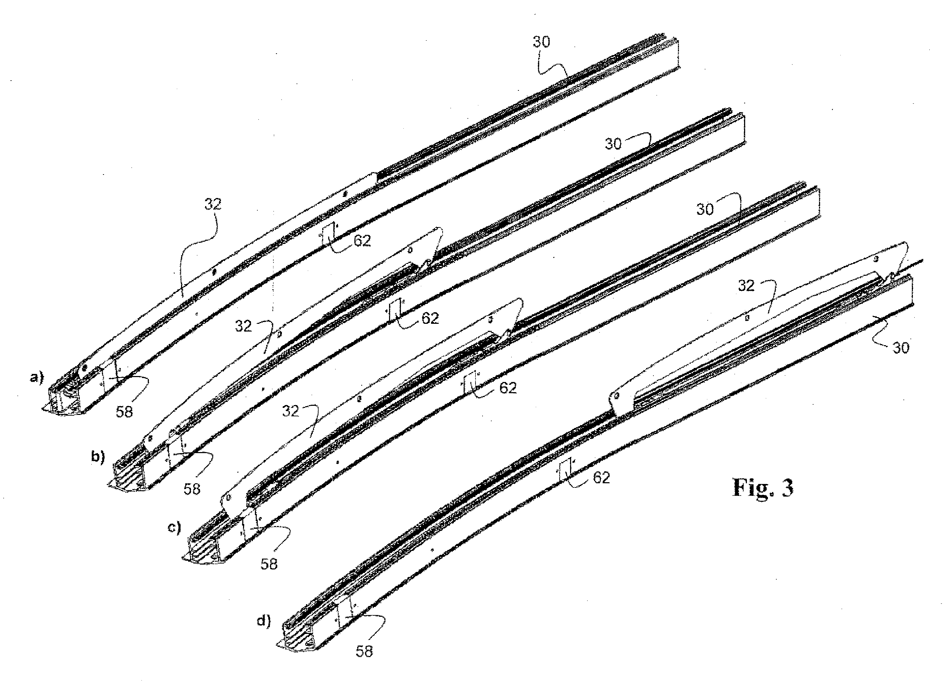

Wie insbesondere den Figuren 2 und 3 zu entnehmen ist, wird das Deckelelement 12 zum Freigeben der Dachöffnung 14 ausgehend von der Schließstellung (Figuren 2a und 3a) zunächst in eine so genannte Lüfterstellung ausgeschwenkt, in der ein hinterer Rand 16 des Deckelelements gegenüber einem an die Dachöffnung 14 angrenzenden festen Dachabschnitt 18 nach oben ausgestellt ist (Figuren 2b und 3b). Ausgehend von dieser Lüfterstellung wird das Deckelelement 12 an seinem vorderen Rand 20 gegenüber dem festen Dachabschnitt 18 angehoben und damit in eine Freigabe- bzw. Verschiebestellung gebracht, in der das Deckelelement 20 in Längsrichtung des Daches 10 verschoben werden kann (Figuren 2c und 3c). Das Deckelelement 12 kann dann in seine Öffnungsstellung (Figuren 2d und 3d) verfahren werden, in welcher die Dachöffnung 14 freigegeben ist und das Deckelelement 12 oberhalb des festen Dachabschnitts 18 angeordnet ist.

Zum Ausstellen und Verfahren des Deckelelements 12 weist die Schiebedeckelanordnung bezogen auf eine Längsmittelebene des Daches 10 beidseits eine Steuermechanik für das Deckelelement 12 auf. Die steuerbordseitig und backbordseitig angeordneten Steuermechaniken sind spiegelsymmetrisch zueinander ausgebildet, weshalb nachfolgend nur die backbord angeordnete Steuermechanik beschrieben wird.

Die Steuermechanik umfasst einen vorderen Hub- und Gleitmechanismus 22, der dem vorderen Rand 20 des Deckelelements 12 zugeordnet ist, und einen hinteren Hub- und Gleitmechanismus 24, der auf den hinteren Rand 16 des Deckelelements 12 wirkt.

Der vordere Hub- und Gleitmechanismus 22 umfasst ein vorderes, als Antriebsschlitten ausgebildetes Gleitelement 26, das über Führungselemente 28 in einem Führungskanal einer Führungsschiene 30 geführt ist und dem vorderen Rand 20 des Deckelelements 12 zugeordnet ist. Die Anbindung des Gleitelements 26 an das Deckelelement 12 erfolgt über einen Deckelträger 32, der sich parallel zu der Führungsschiene 3 0 erstreckt und in seinem vorderen Endbereich einen Steuerzapfen 34 aufweist, der in eine als Kulisse ausgebildeten Steuerbahn 36 des Gleitelements bzw. Antriebsschlittens 26 eingreift. Wie insbesondere Figur 2 zu entnehmen ist, hat die Steuerbahn 36 einen in Richtung des vorderen Randes 20 des Deckelelements 12 gekrümmt ansteigenden Verlauf mit zunehmender Steigung.

Das vordere Gleitelement 26 bildet zusammen mit einem hinteren, ebenfalls einen Antriebsschlitten bildenden und dem hinteren Hub- und Gleitmechanismus 24 zugeordneten Gleitelement 38 eine Gleitereinrichtung bzw. -einheit und ist mit dem hinteren Gleitelement 38 über eine ein Koppelelement bildende Koppelstange 40 verbunden. Zum Ausgleich von Toleranzen ist die Koppelstange 40, die drucksteif ausgebildet ist, über ein vorderes Gelenk 42 an das vordere Gleitelement 26 und über ein hinteres Gelenk 44 an das hintere Gleitelement 38 angebunden.

Das hintere Gleitelement 38, das über Führungselemente 46 in einem Führungskanal der Führungsschiene 30 geführt ist, ist dem hinteren Rand 18 des Deckelelements 12 zugeordnet und über einen Ausstellhebel 48, der über eine Achse 50 an dem Deckelträger 32 angelenkt ist, mit dem Deckelelement 12 gekoppelt. Der Ausstellhebel 48 weist in seinem der Achse 50 abgewandten Endbereich einen Steuerzapfen 52 auf, der sich in Deckelelementquerrichtung erstreckt und in eine als Kulisse ausgebildete Steuerbahn 53 des hinteren Gleitelements 38 eingreift. Die Steuerbahn 53 hat einen angenähert S-förmigen Verlauf und einen vorderen Endabschnitt A, der sich zumindest annähernd parallel zu der Führungsschiene 3 0 erstreckt und der Öffnungsstellung des Deckelelements zugeordnet ist, einen hinteren Endabschnitt B, der sich ebenfalls zumindest annähernd parallel zu der Führungsschiene 30 erstreckt und der Schließstellung des Deckelelements zugeordnet ist, sowie einen die beiden Endabschnitte A und B verbindenden, dem Verschwenken des Ausstellhebels 48 zugeordneten Verschwenkabschnitt C, der in Richtung des hinteren Randes 18 des Deckelelements 12 einen ansteigenden Verlauf hat und dessen Achse mithin gegenüber den Achsen der beiden Endabschnitte A und B angestellt ist.

Der Ausstellhebel 48 weist an seiner Unterseite einen Vorsprung 54 auf, in dessen Bereich er über eine Achse 56 an einem in der Führungsschiene 30 geführten Gleiter 57 schwenkbar gelagert ist. Die Achse 56 bildet also die Schwenkachse des Ausstellhebels 48 beim Verfahren des Steuerzapfens 52 in der Steuerbahn 53 des Gleitelements 38.

Der Antrieb, der die beiden Gleitelemente 26 und 38 ausweisenden Gleitereinheit erfolgt mittels eines drucksteifen Antriebskabels 39, das mit dem hinteren Gleitelement 38 gekoppelt ist.

Die Führungsschiene 30 weist des Weiteren zur Sicherung der Schließstellung des Deckelelements einen vorderen Einsatz 58 mit einer vorderen Sperrkulisse 60 sowie einen hinteren Einsatz 62 mit einer hinteren Sperrkulisse 64 auf. In die vordere Sperrkulisse 62 greift beim Schließen des Deckelelements 12 und in der Schließstellung des Deckelelements 12 ein Sperrzapfen 66 ein, der beim Verschieben des Deckelelements 12 einen Gleitschuh darstellt und aus einer POM-Hülse mit einem EPDM-Kern besteht. Die Achse des Sperrzapfens 66 fluchtet mit der Achse des dem vorderen Rand 20 des Deckelelements 12 zugeordneten Steuerzapfens 34, der ebenfalls an dem Deckelträger 32 ausgebildet ist. In die hintere Sperrkulisse 64 greift in der Schließstellung des Deckelelements 12 bzw. beim Verschwenken des Ausstellhebels 48 ein Sperrzapfen 68 ein, der an dem Ausstellhebel 48 angeordnet ist und dessen Achse mit der Achse des in die Steuerbahn eingreifenden Steuerzapfens 52 fluchtet, der mithin in Querrichtung des Deckelelements 12 von dem Ausstellhebel 48 vorspringt.

Die vordere Sperrkulisse 60 hat einen Einlaufabschnitt 70, der mit einem oberen Führungskanal 72 der Führungsschiene 30 fluchtet, sowie einen nach vorne abfallenden Sperrabschnitt 74 mit einem vorderen bzw. unteren Anschlag 76 für den Sperrzapfen 66. Die hintere Sperrkulisse 64 hat einen Einlaufabschnitt 78, der mit einem unteren Führungskanal 80 der Führungsschiene 30 fluchtet und vorne über eine nach oben gerichtete Krümmung in einen zumindest angenähert rechtwinklig zu der Führungsschiene 30 ausgerichteten Sperrabschnitt 82 übergeht.

Die anhand der Zeichnung detailliert dargestellte Schiebedeckelanordnung arbeitet in nachfolgend beschriebener Weise.

Ausgehend von der in den Figuren 2a und 3a dargestellten Schließstellung wird mittels eines Antriebsmotors, der das mit dem hinteren Gleitelement 3 8 verbundene drucksteife Antriebskabel 39 antreibt, die aus dem vorderen Gleitelement 36 und dem hinteren Gleitelement 38 bestehende Gleitereinheit nach hinten, d.h. heckwärts gezogen. Dadurch wird durch das Verfahren des Steuerzapfens 34 in der Steuerbahn 53 des Gleitelements 38 der Ausstellhebel 48 mit seinem hinteren Ende nach oben verschwenkt, so dass der hintere Rand 16 des Deckelelements 12 gegenüber dem festen Dachabschnitt 18 nach oben ausgestellt wird. Während des Verschwenkens durchläuft der Steuerzapfen 52 den Verschwenkabschnitt C. Im ausgestellten Zustand liegt der Steuerzapfen 52 in dem vorderen Endabschnitt A, so dass ein weiteres Verschwenken des Ausstellhebels 48 gesperrt ist. Beim Verschwenken des Ausstellhebels 48 wird des Weiteren der Sperrzapfen 68 in der hinteren Sperrkulisse 64 aus dem Sperrabschnitt 22 nach unten in den Einführabschnitt 78 bewegt.

Wenn nach dem Erreichen der anhand der Figuren 2b und 3b dargestellten Lüfterstellung die Gleitereinheit weiter nach hinten gezogen wird, wird der vordere, an dem Deckelträger 32 ausgebildete Steuerzapfen 34 in der Steuerbahn 36 des vorderen Gleitelements 26 verfahren, wodurch der vordere Rand 20 des Deckelelements 12 ebenfalls angehoben wird. Hierbei bewegt sich der vordere Sperrzapfen 66, der an dem Deckelträger 32 ausgebildet ist, die vordere Sperrkulisse 60 aus dem Sperrabschnitt 74 in den Einlaufabschnitt 70. Das Deckelelement 12 ist damit für eine Verschiebung in den Führungsschienen 28 freigegeben (Figuren 2c und 3c).

Aus der in den Figuren 2c und 3c dargestellten Freigabe- bzw. Verschiebestellung kann dann das Deckelelement 12 durch weiteres Verfahren der Gleitereinheit in eine Öffnungsstellung verfahren werden. Bei diesem Verfahren liegt der vordere Steuerzapfen an der einen Anschlag bildenden, vorderen Begrenzungsfläche der Kulissenbahn 36 an, wohingegen der an dem Ausstellhebel 48 ausgebildete Steuerzapfen 52 an der vorderen, ebenfalls einen Anschlag bildenden Begrenzungsfläche der Steuerbahn 53 in dessen Endabschnitt A anliegt. Die Verschiebestellung ist des Weiteren durch die Sperrzapfen 66 und 68 gesichert, die in den Führungskanälen 72 und 80 der Führungsschiene 30 angeordnet sind und einen vertikalen Versatz des hinteren Randes 20 und des unteren Randes 16 des Deckelelements 12 verhindern.

Beim Verfahren des Deckelelements 12 in dessen Schließstellung arbeitet die vorstehend beschriebene Deckelkinematik in umgekehrter Weise. Insbesondere fährt der vordere Sperrzapfen 66 nach Erreichen der in den Figuren 2c und 3c dargestellten Verschiebestellung in die vordere Sperrkulisse 60 ein, wobei beim anschließenden Absenken des vorderen Randes 20 des Deckelelements 12 durch Weiterverfahren des Gleiterelements 36 der Sperrzapfen 66 in den Sperrabschnitt 74 der Sperrkulisse 60 eintaucht und die Lüfterstellung erreicht wird, die anhand der Figuren 2b und 3b dargestellt ist. Anschließend durchläuft der hintere, an dem Ausstellhebel 48 ausgebildete Steuerzapfen 52 die Steuerbahn 53 des hinteren Gleitelements 38, so dass der Ausstellhebel 48 verschwenkt und der hintere Rand 16 des Deckelelements 12 abgesenkt wird, bis die in den Figuren 2a und 3a dargestellte Schließstellung erreicht ist. Hierbei fährt der hintere Sperrzapfen 68, der an dem Ausstellhebel 48 ausgebildet ist, in die hintere Sperrkulisse 64 ein, bis er bei Erreichen der Schließstellung in dem Sperrabschnitt 74 angeordnet ist.

In der in den Figuren 2a und 3a dargestellten Schließstellung wird durch die Wirkung der vorderen Steuerbahn 36, die Wirkung der hinteren Steuerbahn 53 und durch die Sperrkulissen 60 und 64 das Deckelelement 12 satt gegen eine dachfeste Dichtfläche gedrückt, wodurch auch höchsten, insbesondere im marinen Bereich bestehenden Anforderungen genügt werden kann. Ein Versatz des Deckelelements 12 in vertikaler Richtung wird durch die Steuerbahnen 36 und 53 verhindert, in die die Steuerzapfen 34 und 52 eingreifen. Ein Verfahren des Deckelelements 12 in Längsrichtung der Führungsschienen 30 wird durch die Sperrkulissen 60 und 64 verhindert, in die die Sperrzapfen 66 und 68 eingreifen.

Des Weiteren kann die Außenfläche des Deckelelements 12 in der Schließstellung mit der Fläche des an die Dachöffnung 14 angrenzenden, festen Dachabschnitts fluchten.

### Bezugszeichenliste

- 10: Dach
- 12: Deckelelement
- 14: Dachöffnung
- 16: hinterer Rand
- 18: fester Dachabschnitt
- 20: vorderer Rand
- 22: vorderer Hub- und Gleitmechanismus
- 24: hinterer Hub- und Gleitmechanismus
- 26: vorderes Gleitelement
- 28: Führungselement
- 30: Führungsschiene
- 32: Deckelträger
- 34: Steuerzapfen
- 36: Steuerbahn
- 38: hinteres Gleitelement
- 39: Antriebskabel
- 40: Koppelstange
- 42: vorderes Gelenk
- 44: hinteres Gelenk
- 46: Führungselemente
- 48: Ausstellhebel
- 50: Achse
- 52: Steuerzapfen
- 53: Steuerbahn
- 54: Vorsprung
- 56: Achse
- 57: Gleiter
- 58: Einsatz
- 60: vordere Sperrkulisse
- 62: Einsatz
- 64: hintere Sperrkulisse
- 66: Sperrzapfen
- 68: Sperrzapfen
- 70: Einlaufabschnitt
- 72: oberer Führungskanal
- 74: Sperrabschnitt
- 76: Anschlag
- 77: Einlaufabschnitt
- 80: unterer Führungskanal
- 82: Sperrabschnitt

## Patentansprüche

1. Schiebedeckelanordnung für ein Fahrzeug, insbesondere ein wassergebundenes Fahrzeug, mit einem Deckelelement (12), das zwischen einer Schließstellung, in der eine Fahrzeugöffnung (14) verschlossen ist, und einer Öffnungsstellung verstellbar ist, in der die Fahrzeugöffnung (14) freigegeben ist, und mit einer Steuermechanik für das Deckelelement (12), die bezogen auf eine Längsmittelebene des Deckelelements (12) beidseits eine Gleitereinheit umfasst, die in einer fahrzeugfesten Schienenanordnung (30) geführt ist und mittels eines druckfesten Antriebskabels (39) angetrieben ist, wobei die in den Schienenanordnungen geführten Gleitereinheiten jeweils ein vorderes Gleitelement (26), das einem vorderen Rand (20) des Deckelelements (12) zugeordnet ist, und ein hinteres Gleitelement (38) umfassen, das einem hinteren Rand (16) des Deckelelements (12) zugeordnet ist, **dadurch gekennzeichnet, dass** die beiden Gleitelemente (26, 38) jeweils eine mit einem Steuerzapfen (34, 52) zusammenwirkende Steuerbahn (36, 53) zum vertikalen Versatz des jeweiligen Randes (16, 20) des Deckelelements (12) umfassen und dass sowohl dem vorderen Rand (20) als auch dem hinteren Rand (16) des Deckelelements (12) ein Sperrelement (66, 68) zugeordnet ist, das in der Schließstellung in eine jeweilige Sperrkulisse (60, 64) eingreift, die an der Schienenanordnung (30) angeordnet ist und einen Versatz des Deckelelements (12) parallel zur Achse der Schienenanordnung (30) sperrt.

2. Schiebedeckelanordnung nach Anspruch 1, **dadurch gekennzeichnet, dass** die dem vorderen Gleitelement (26) und dem hinteren Gleitelement (38) zugeordneten Sperrkulissen (60, 64) jeweils von einem Einsatz (58, 62) der jeweiligen Schienenanordnung (30) gebildet sind.

3. Schiebedeckelanordnung nach Anspruch 1 oder 2, **dadurch gekennzeichnet, dass** die dem hinteren Gleitelement (38) zugeordnete Sperrkulisse (64) der Schienenanordnung (30) eine in einen Führungskanal (80) der Schienenanordnung (30) mündenden Einlaufabschnitt (78) und einen gegenüber diesem Führungskanal (80) schräg oder zumindest annähernd rechtwinkelig angestellten Sperrabschnitt (82) aufweist.

4. Schiebedeckelanordnung nach einem der Ansprüche 1 bis 3, **dadurch gekennzeichnet, dass** das Deckelelement (12) beidseits jeweils einen Deckelträger (32) umfasst, an dem zur Koppelung mit der Steuerbahn (36) des vorderen Gleitelements (26) ein Steuerzapfen (34) ausgebildet ist und zur Kopplung mit der Steuerbahn (53) des hinteren Gleitelements (38) ein Ausstellhebel (48) angelenkt ist, der mit dem in die Steuerbahn (53) des hinteren Gleitelements (38) eingreifenden Steuerzapfen (52) versehen ist.

5. Schiebedeckelanordnung nach Anspruch 4, **dadurch gekennzeichnet, dass** die Steuerbahn (53) des hinteren Gleitelements (38) einen sich zumindest annähernd parallel zur Führungsschiene (30) erstreckenden, der Schließstellung des Deckelelements (12) zugeordneten, ersten Endabschnitt (B) und einen sich zumindest annähernd parallel zur Führungsschiene (30) erstreckenden, der Öffnungsstellung des Deckelelements (12) zugeordneten, zweiten Endabschnitt (A) und einen die beiden Endabschnitte (A, B) verbindenden, dem Verschwenken des Ausstellhebels (48) zugeordneten Verschwenkabschnitt (C) umfasst, dessen Achse gegenüber den Achsen der beiden Endabschnitte (A, B) angestellt ist.

6. Schiebedeckelanordnung nach Anspruch 4 oder 5, **dadurch gekennzeichnet, dass** der Ausstellhebel (48) an einem Gleiter (57) gelagert ist, der eine Ausstellhebelschwenkachse (56) definiert und in einem Führungskanal (80) der Schienenanordnung (30) geführt ist.

7. Schiebedeckelanordnung nach einem der Ansprüche 1 bis 6, **dadurch gekennzeichnet, dass** in der Schließstellung des Deckelelements (12) die Steuerbahn (53) des hinteren Gleitelements (38) einen vertikalen Versatz des hinteren Randes (16) des Deckelelements (12) sperrt und die an der Schienenanordnung (30) ausgebildete Sperrkulisse (64) für den Sperrzapfen (68) des hinteren Deckelelementrandes (16) einen Versatz des Deckelelements (12) in dessen Verschieberichtung sperrt.

8. Schiebedeckelanordnung nach einem der Ansprüche 1 bis 7, **dadurch gekennzeichnet, dass** in der Schließstellung des Deckelelements (12) die Steuerbahn (36) des vorderen Gleitelements (26) einen vertikalen Versatz des vorderen Randes (20) des Deckelelements (12) sperrt und die an der Schienenanordnung (30) ausgebildete Sperrkulisse (60) für den Sperrzapfen (66) des vorderen Deckelelementsrandes (20) einen Versatz des Deckelements (12) in Verschieberichtung sperrt.

9. Schiebedeckelanordnung nach einem der Ansprüche 1 bis 8, **dadurch gekennzeichnet, dass** das drucksteife Antriebskabel (39) zum Antrieb der jeweiligen Gleiteinheit aus einem vorderen Gleitelement (26) und einem hinteren Gleitelement (38) nur mit einem der beiden Gleitelemente, insbesondere nur mit dem hinteren Gleitelement (38) verbunden ist.

## Claims

1. A retractable lid arrangement for a vehicle, in particular for a water vehicle, having a lid member (12) being displaceable between a closed position, in which a vehicle opening (14) is closed, and an open position, in which the vehicle opening (14) is cleared, and having a control mechanism for the lid member (12), which, in relation to a longitudinal centre plane of the lid member (12), on both sides, comprises a slider unit, which is guided in a rail arrangement (30) being fixed relative to the vehicle and is driven with the aid of a compression-proof drive cable (39), wherein the slider units being guided in the rail arrangements each comprise a front sliding member (26), which is assigned to a front edge (20) of the lid member (12), and a rear sliding member (38), which is assigned to a rear edge (16) of the lid member (12), **characterised in that** the two sliding members (26, 38) each comprise a control track (36, 53) interacting with a control pin (34, 52) for vertically offsetting the respective edge (16, 20) of the lid member (12) and **in that** a blocking member (66, 68) is assigned both to the front edge (20) and to the rear edge (16) of the lid member (12), which blocking member, in the closed position, engages a respective blocking slot (60, 64), which is arranged at the rail arrangement (30) and blocks an offsetting of the lid member (12) parallel to the axis of the rail arrangement (30).

2. The retractable lid arrangement according to claim 1, **characterised in that** the blocking slots (60, 64) being assigned to the front sliding member (26) and to the rear sliding member (38) are each formed by an insert (58, 62) of the respective rail arrangement (30).

3. The retractable lid arrangement according to claim 1 or 2, **characterised in that** the blocking slot (64) appertaining to the rail arrangement (30) and being assigned to the rear sliding member (38) includes an infeed section (78) ending in a guide channel (80) of the rail arrangement (30) and a blocking section (82) being set relative to said guide channel (80) in a sloped fashion or at least nearly at a right angle.

4. The retractable lid arrangement according to any one of the claims 1 to 3, **characterised in that** the lid member (12) comprises a lid support (32) on each of its two sides, a control pin (34) being realised at said support for coupling to the control track (36) of the front sliding member (26) and a deploying lever (48) being articulated to said support for coupling to the control track (53) of the rear sliding member (38), said lever being provided with the control pin (52) engaging the control track (53) of the rear sliding member (38).

5. The retractable lid arrangement according to claim 4, **characterised in that** the control track (53) of the rear sliding member (38) comprises a first end section (B) extending at least nearly parallel to the guide rail (30) and being assigned to the closed position of the lid member (12) and a second end section (A) extending at least nearly parallel to the guide rail (30) and being assigned to the open position of the lid member (12) and a pivoting section (C) which connects the two end sections (A, B) and is assigned to pivoting the deploying lever (48), and whose axis is set relative to the axes of the two end sections (A, B).

6. The retractable lid arrangement according to claim 4 or 5, **characterised in that** the deploying lever (48) is borne at a slider (57), which defines a deploying lever pivot axis (56) and is guided in a guide channel (80) of the rail arrangement (30).

7. The retractable lid arrangement according to any one of the claims 1 to 6, **characterised in that**, in the closed position of the lid member (12), the control track (53) of the rear sliding member (38) blocks a vertical offsetting of the rear edge (16) of the lid member (12) and **in that** the blocking slot (64) being realised at the rail arrangement (30), for the blocking pin (68) of the rear lid member edge (16), blocks an offsetting of the lid member (12) in the retracting direction thereof.

8. The retractable lid arrangement according to any one of the claims 1 to 7, **characterised in that**, in the closed position of the lid member (12), the control track (36) of the front sliding member (26) blocks a vertical offsetting of the front edge (20) of the lid member (12) and **in that** the blocking slot (60) being realised at the rail arrangement (30), for the blocking piston (66) of the front lid member edge (20), blocks an offsetting of the lid member (12) in the retracting direction.

9. The retractable lid arrangement according to any one of the claims 1 to 8, **characterised in that** the drive cable (39) being rigid in compression, for driving the respective sliding unit being made up of a front sliding member (26) and a rear sliding member (38), is only connected to one of the two sliding members, in particular only to the rear sliding member (38).

## Revendications

1. Ensemble de capot coulissant pour un véhicule, en particulier pour un véhicule flottant, ayant un élément (12) de capot étant ajustable entre une position fermée, dans laquelle une ouverture (14) de véhicule est fermée, et une position ouverte, dans laquelle l'ouverture (14) de véhicule est dégagée, et ayant un mécanisme de commande pour l'élément (12) de capot, qui, relativement à un plan central longitudinal de l'élément (12) de capot, de part et d'autre, comprend une unité de glissière, qui est guidée dans un ensemble (30) de rails étant fixé au véhicule et est entraînée moyennant un câble (39) d'entraînement à l'épreuve de pression, dans lequel les unités de glissière étant guidées dans les ensembles de rails chaque fois comprennent un élément (26) de glissement avant, qui est associé avec une bordure (20) avant de l'élément (12) de capot, et un élément (38) de glissement arrière, qui est associé avec une bordure (16) arrière de l'élément (12) de capot, **caractérisé en ce que** les deux éléments (26, 38) de glissement chaque fois comprennent un couloir (36, 53) de commande coopérant avec un tenon (34, 52) de commande pour un décalage vertical de la bordure (16, 20) respective de l'élément (12) de capot et **en ce qu'**un élément (66, 68) de verrouillage est associé non seulement avec la bordure (20) avant, mais encore avec la bordure (16) arrière de l'élément (12) de capot, ledit élément de verrouillage, dans la position fermée, pénétrant dans une coulisse (60, 64) de verrouillage respective, qui est disposée à l'ensemble (30) de rails et verrouille un décalage de l'élément (12) de capot parallèlement à l'axe de l'ensemble (30) de rails.

2. Ensemble de capot coulissant selon la revendication 1, **caractérisé en ce que** les coulisses (60, 64) de verrouillage étant associées avec l'élément (26) de glissement avant et avec l'élément (38) de glissement arrière chaque fois sont formées par un insert (58, 62) de l'ensemble (30) de rails respectif.

3. Ensemble de capot coulissant selon la revendication 1 ou 2, **caractérisé en ce que** la coulisse (64) de verrouillage appartenant à l'ensemble (30) de rails et étant associée avec l'élément (38) de glissement arrière présente une partie (78) de gorge débouchant dans un conduit (80) de guidage de l'ensemble (30) de rails et une partie (82) de verrouillage étant inclinée en biais ou au moins approximativement à angle droit par rapport audit conduit (80) de guidage.

4. Ensemble de capot coulissant selon l'une quelconque des revendications 1 à 3, **caractérisé en ce que** l'élément (12) de capot comprend un support (32) de capot de part et d'autre, un tenon (34) de commande étant réalisé audit support en vue d'un couplage au couloir (36) de commande de l'élément (26) de glissement avant et un levier (48) orientable étant articulé audit support en vue d'un couplage au couloir (53) de commande de l'élément (38) de glissement arrière, ledit levier étant muni du tenon (52) de commande pénétrant dans le couloir (53) de commande de l'élément (38) de glissement arrière.

5. Ensemble de capot coulissant selon la revendication 4, **caractérisé en ce que** le couloir (53) de commande de l'élément (38) de glissement arrière comprend une première partie (B) d'extrémité s'étendant au moins approximativement parallèlement au rail (30) de guidage et étant associée avec la position fermée de l'élément (12) de capot et une deuxième partie (A) d'extrémité s'étendant au moins approximativement parallèlement au rail (30) de guidage et étant associée avec la position ouverte de l'élément (12) de capot et une partie (C) de pivotement qui relie les deux parties (A, B) d'extrémité et est associé avec pivoter le levier (48) orientable, et l'axe de laquelle est incliné par rapport aux axes des deux parties (A, B) d'extrémité.

6. Ensemble de capot coulissant selon la revendication 4 ou 5, **caractérisé en ce que** le levier (48) orientable est monté à une glissière (57), qui définit un axe (56) de pivotement du lever orientable et est guidée dans un conduit (80) de guidage de l'ensemble (30) de rails.

7. Ensemble de capot coulissant selon l'une quelconque des revendications 1 à 6, **caractérisé en ce que**, dans la position fermée de l'élément (12) de capot, le couloir (53) de commande de l'élément (38) de glissement arrière verrouille un décalage vertical de la bordure (16) arrière de l'élément (12) de capot et **en ce que** la coulisse (64) de verrouillage étant réalisée à l'ensemble (30) de rails, pour le tenon (68) de verrouillage de la bordure (16) d'élément de capot arrière, verrouille un décalage de l'élément (12) de capot dans sa direction de coulissérrient.

8. Ensemble de capot coulissant selon l'une quelconque des revendications 1 à 7, **caractérisé en ce que**, dans la position fermée de l'élément (12) de capot, le couloir (36) de commande de l'élément (26) de glissement avant verrouille un décalage vertical de la bordure (20) avant de l'élément (12) de capot et **en ce que** la coulisse (60) de verrouillage étant réalisée à l'ensemble (30) de rails, pour le tenon (66) de verrouillage de la bordure (20) d'élément de capot avant, verrouille un décalage de l'élément (12) de capot dans la direction de coulissement.

9. Ensemble de capot coulissant selon l'une quelconque des revendications 1 à 8, **caractérisé en ce que** le câble (39) d'entraînement étant résistant à la pression, pour entraîner l'unité de glissement se composant d'un élément (26) de glissement avant et d'un élément (38) de glissement arrière, est seulement relié avec l'un des deux éléments de glissement, en particulier seulement avec l'élément (38) de glissement arrière.
